(19) Europäisches Patentamt
European Patent Office
Office européen des brevets

(11) EP 0 776 609 A1

## (12) EUROPÄISCHE PATENTANMELDUNG

(43) Veröffentlichungstag:
04.06.1997 Patentblatt 1997/23

(51) Int. Cl.6: **A23G 3/00**, A23G 1/00

(21) Anmeldenummer: 96116594.1

(22) Anmeldetag: 16.10.1996

(84) Benannte Vertragsstaaten:
AT BE CH DE DK ES FI FR GB GR IE IT LI LU MC NL PT SE

(30) Priorität: 30.11.1995 DE 19544795

(71) Anmelder:
• Innogram AG
4102 Binningen 2/Basel (CH)

• Futurplan AG
9490 Vaduz (LI)

(72) Erfinder: **Ahlschwede, Wolfgang**
79540 Lörrach (DE)

(74) Vertreter: **Grünecker, Kinkeldey, Stockmair & Schwanhäusser Anwaltssozietät**
Maximilianstrasse 58
80538 München (DE)

(54) **Komposit Schokoladenwaren**

(57)     Es werden Schokoladenwaren, insbesondere eine Praline, mit einem neuartigen, verbesserten Geschmackserlebnis beschrieben. Zu diesem Zweck enthält die Schokoladenware eine erste Füllung (4) und eine zweite Füllung (5), die miteinander reaktiosfähig und durch eine beim Verzehr zerstörbare Barriere (6) voneinander getrennt sind.

EP 0 776 609 A1

## Beschreibung

Die Erfindung bezieht sich auf Schokoladenwaren, inbesondere eine Praline, mit zwei Füllungen.

Konfekt und Pralinen sind den unterschiedlichsten Ausgestaltungen und Geschmacksrichtungen bekannt. Es ist weiterhin bekannt, Pralinen mit zwei Füllungen, beispielsweise Nougat und Marzipan, zu versehen. Beim Verzehr werden jedoch beide Geschmacksrichtungen vom Benutzer getrennt wahrgenommen und getrennt registriert.

Der Erfindung liegt die Aufgabe zugrunde, Schokoladenwaren, insbesondere eine Praline mit einem einem neuartigen Geschmackserlebnis und Verzehreffekt zu schaffen.

Die Aufgabe wird durch die im Anspruch 1 angegebenen Merkmale gelöst.

Durch die erfindungsgemäße Ausgestaltung können nach Wunsch spezielle Geschmackserlebnisse, insbesondere durch physikalische Einwirkung auf die Zunge oder andere Teile der Mundhöhle, die mit herkömmlichen Füllungen nicht zu erreichen sind, erzielt werden.

Besonders bevorzugt sind Füllungen, die gemäß Anspruch 2 unter Gasbildung miteinander reagieren und somit ein angenehmes Prickelgefühl erzeugen.

Zweckmäßigerweise wird gemäß Anspruch 3 Kohlensäuregas erzeugt.

Zum Erzeugen des Kohlensäuregases enthält die erste Füllung gemäß Anspruch 4 Natriumbicarbonat und die zweite Füllung gemäß den Ansprüchen 5 und 6 eine Säure, bevorzugt Zitronensäure.

Zum durch die chemische Reaktion erzeugten Prikkeln auf der Zunge paßt sehr gut das in Anspruch 7 beschriebene Champagner-Konzetrat.

Zur besseren Abschirmung gegeneinander und gegen Umgebungseinflüsse sind gemäß Anspruch 8 die Füllungen jeweils in eigenen Kammern aufgenommen.

Zur Verbesserung des Geschmackserlebnisses können die Kammern gemäß Anspruch 9 aus unterschiedlichem Material bestehen.

Die Materialauswahl für die einzelnen Kammern und die Barriere gemäß Anspruch 10 dient der weiteren Verbesserung des Geschmackserlebnisses, indem sie sicherstellt, daß der Abschmelzprozeß im Mund stufenweise erfolgt. Dabei schmilzt zuerst die weiße Schokolade und erst mit Verzögerung die dunkle Schokolade. Dies bewirkt, daß die Flüssigkeit, die beim Zerkauen frei wird und reagiert, nicht sofort von der durch Mundwärme verflüssigten Fettmasse "erschlagen" wird und die Reaktion eindämmt bzw. sogar verhindert. Der prikkelnde Effekt kann sich so besser entfalten und wird zum Schluß durch das verzögerte Abschmelzen der dunklen Schokolade nicht zu süß abgerundet. Durch den prickelnden Effekt und den am Schluß verbleibenden, eher leicht herberen Schokoladencharakter erhält das Konfekt ein frischeres Geschmackserlebnis.

Gemäß Anspruch 11 sollte die weiße Schokolade lecithinfrei sein, da Lecithin mit dem Wasseranteil im Alkohol einen Weichemacheeffekt aufweist und die Haltbarkeit herabsetzt.

Durch die Ausgestaltung nach Anspruch 12 wird eine nicht zu bestandteilreiche Füllung erzielt.

Eine besonders bevorzugte Rezeptur für die Füllung beschreibt Anspruch 13.

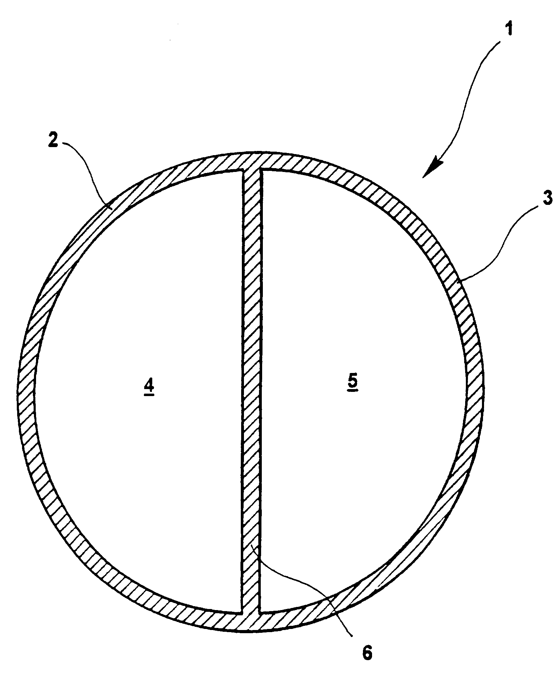

Die Erfindung wird nachfolgend anhand eines im Schnitt gezeichneten Ausführungsbeispiels in der einzigen Figur erläutert.

Die Fig. zeigt im Schnitt eine stark vergrößerte Darstellung einer Kugelpraline 1, die aus einer ersten Halbschale 2 und einer zweiten Halbschale 3 zusammengesetzt ist. Die erste Halbschale 2 besteht aus einer üblichen dunklen Schokolade und umschließt eine erste Kammer 4, in der eine erste Füllung enthalten ist. Die zweite Halbschale 3 besteht aus weißer Schokolade und umschließt eine zweite Kammer 5, in der eine zweite Füllung enthalten ist. Die beiden Kammern 4 und 5 sind durch einen Barriere 6 voneinander getrennt, die aus dunkler Schokolade besteht. Die Kugel kann in üblicher Weise mit Kuvertüre überzogen und abgeblasen sein.

Die erste Füllung in der ersten Kammer 4 und die zweite Füllung in der zweiten Kammer 5 enthalten beide ein Champagnerkonzentrat von bevorzugt "mostigem" Geschmackscharakter, der besser zur süßen Schokolade paßt als ein Champagnerkonzentrat mit eher trockenem Geschmackscharakter. Die erste Füllung in der ersten Kammer 4 enthält Natriumbicarbonat ($NaHCO_3$). Die zweite Füllung in der zweiten Kammer 5 enthält eine Säure, insbesondere eine Fruchtsäure, bevorzugt Zitronensäure. Wird die Praline 1 zerkaut, so kommen die beiden Füllungen 4 und 5 in Kontakt miteinander, wobei durch die Zitronensäure das Natriumbicarbonat gespalten und Kohlensäuregas freigesetzt wird. Dieses Kohlensäuregas zusammen mit dem Champagnergeschmack des Champagnerkonzentrats ergeben eine prickelnde Champagner-Praline.

Als dunkle Schokolade für die erste Kammer 4ist die handelsübliche Zartbitter-Schokolade bevorzugt. Sie darf den üblichen Anteil Lecithin enthalten, kann jedoch auch aus Haltbarkeitsgründen lecithinfrei sein. Die weiße Schokolade ist ebenfalls handelsüblich, muß jedoch lecithinfrei sein. Das Lecithin wird durch einen erhöhten Anteil Kakaobutter ersetzt.

Es wird ein handelsübliches Champagnerkonzentrat 60 Vol.% mit einem mostigem Charakter verwendet.

Die erfindungsgemäße Praline 1 ist mit bestehenden Anlagen problemlos und kostengünstig zu fertigen und wird folgendermaßen hergestellt. Aus den beiden Schokoladensorten werden Halbschalen geformt, die zur Reduzierung des Lösungsvermögens der Füllung an ihrer Innenseite mit Fett besprüht wird.

Zur Herstellung der Füllung wird ein Sirup mit folgenden Mischungsverhältnissen bei 80°R (ca. 100°C) gekocht:

| Wasser | 25 - 30 %, bevorzugt | 29,54% |
|--------|----------------------|--------|
| Zucker | 50 - 65 %, bevorzugt | 59,07% |
| Glucose | 5 - 12 %, bevorzugt | 8,44% |
| Karion | 1,5 - 3,5%, bevorzugt | 2,95% |
| | | 100,00% |

Zu dieser Sirup-Menge = 100% werden Champagner-Konzentrat 60 Vol.% 45 - 65 %, bevorzugt 55,3%, hinzugefügt.

Aus dieser Grundmischung Sirup/Champagner werden 2 getrennte Füllmengen gebildet.

Der ersten Teilmenge = 35 - 50%, bevorzugt 42,67%, der Grundmischung werden zur Herstellung der ersten Füllung Natriumbicarbonat (NaHCO$_3$) 2,5 - 4%, bevorzugt 3,49%, in der 7 - 11,5-fachen, bevorzugt 9,6-fachen, Menge Wasser bei 20° aufgelöst und hinzugefügt.

Der zweiten Teilmenge = 50 - 65%, bevorzugt 57,33% der Grundmischung werden zur Herstellung der zweiten Füllung wasserfreie Zitronen-Säure 1,5 - 2,5%, bevorzugt 1,98%, hinzugefügt.

Die erste Füllung mit der Natriumcarbonat-Mischung ist in die erste Kammer 4 der dunklen Schokoladen-Halbkugel 2 zu füllen und mit der Barriere 6 aus dunkler Schokolade abzudeckeln.

Die zweite Füllung mit der hinzugefügten Zitronen-Säure ist in die zweite Kammer 5 der weißen Schokoladen-Halbkugel 3 zu füllen, die Ränder anzuwärmen, und die gedeckelte dunkle Halbkugel 2 zentriert aufzusetzen.

Danach wäre die Gesamtkugel 1 mit weißer Schokolade zu über-ziehen und kräftig abzublasen, bis ein marmorierter Effekt gegeben ist. Der Überzug dient zusätzlich zur Stabilisierung der aufgesetzten Kugelhälfte.

In Abwandlung des beschriebenen und gezeichneten Ausführungsbeispiels kann die Geschmacksrichtung der Füllung (z.B. durch ein anderes Geschmackskonzentrat) verändert werden. Auch kann die erfindungsgemäße Schokoladenware auch nur aus dunkler Schokolade bestehen, was den prikkelnd/schäumenden Effekt marginal verstärkt und zum Schluß einen markant herben Schokoladengeschmack erzeugt, der durchaus in bestimmten Konsumentenkreisen erwünscht sein könnte. Die Schokoladenware kann auch in anderer geometrischer Form vorliegen. Bei festeren Füllungen müssen diese nicht unbedingt in Kammern aufgenommen werden, sondern können beispielsweise auch, nur durch eine Barriere getrennt, mit einem üblichen Überzug versehen werden. In den Füllungen können auch andere Bestandteile, wie z.B. Fruchtstücke, enthalten sein.

## Patentansprüche

1. Schokoladenware, insbesondere Praline (1), enthaltend eine erste und eine zweite Füllung, die miteinander reaktionsfähig und durch eine beim Verzehr zerstörbare Barriere (6) voneinander getrennt sind.

2. Schokoladenware nach Anspruch 1, **dadurch gekennzeichnet,** daß die Reaktion das Freisetzen eines Gases umfaßt.

3. Schokoladenware nach Anspruch 2, **dadurch gekennzeichnet,** daß das Gas Kohlensäuregas ist.

4. Schokoladenware nach einem der Ansprüche 1 bis 3, **dadurch gekennzeichnet,** daß die erste Füllung Natriumbicarbonat (NaHCO3) enthält.

5. Schokoladenware nach einem der Ansprüche 1 bis 4, **dadurch gekennzeichnet,** daß die zweite Füllung eine Säure, insbesondere eine Fruchtsäure, enthält.

6. Schokoladenware nach Anspruch 5, **dadurch gekennzeichnet,** daß die Fruchtsäure Zitronensäure ist.

7. Schokoladenware nach einem der Ansprüche 1 bis 6, **dadurch gekennzeichnet,** daß wenigstens eine Füllung ein Champagner-Konzentrat enthält.

8. Schokoladenware nach einem der Ansprüche 1 bis 7, **dadurch gekennzeichnet,** daß die erste und die zweite Füllung jeweils eine sirupartige Konsistenz aufweisen, wobei die erste Füllung in einer ersten Kammer (4) und die zweite Füllung in einer zweiten Kammer (5) aufgenommen ist, die durch einen die Barriere (6) bildenden Deckel voneinander getrennt sind.

9. Schokoladenware nach Anspruch 8, **dadurch gekennzeichnet,** daß die erste und die zweite Kammer (4, 5) aus unterschiedlichem Material geformt sind.

10. Schokoladenware nach Anspruch 9, **dadurch gekennzeichnet,** daß die erste Kammer (4) und die Barriere (6) aus dunkler Schokolade, insbesondere Zartbitterschokolade, bestehen und die erste Füllung Natriumbicarbonat enthält, und daß die zweite Kammer (5) aus weißer Schokolade besteht und die zweite Füllung Zitronensäure enthält.

11. Schokoladenware nach Anspruch 10, **dadurch gekennzeichnet,** daß die weiße Schokolade lecithinfrei ist.

12. Schokoladenware nach einem der Ansprüche 1 bis 11, **dadurch gekennzeichnet,** daß die erste und die zweite Füllung die gleichen Grundbestandteile enthalten, denen für jede Füllung getrennt die reaktionsfähigen Bestandteile zugemischt sind.

13. Schokoladenware nach einem der Ansprüche 1 bis 12, **dadurch gekennzeichnet,** daß die Füllungen als Grundbestandteile einen Sirup aus 25 bis 30% Wasser, 50 bis 65% Zucker, 5 bis 12% Glucose und 1,5 bis 3,5% Karion, dem 45 bis 64% Champagner-Konzentrat 60 Vol.%, bezogen auf 100% Sirup nach Wasserverdampfung, zugemischt ist, enthalten, wobei die erste Füllung 35 bis 50% der Gesamtmenge der Grundbestandteile und 2,5 bis 4% Natriumbicarbonat ($NaHCO_3$), aufgelöst in der 7 bis 11,5-fachen Menge Wasser und die zweite Füllung 50 bis 65% der Grundbestandteile und 1,5 bis 2,5% wasserfreie Zitronensäure enthält.

14. Schokoladenware nach einem der Ansprüche 1 bis 12, **dadurch gekennzeichnet,** daß die Füllungen als Grundbestandteile einen Sirup aus 29,54% Wasser, 59,07% Zucker, 8,44% Glucose und 2,95% Karion, dem 55,3% Champagner-Konzentrat 60 Vol.%, bezogen auf 100% Sirup nach Wasserverdampfung, zugemischt ist, enthalten, wobei die erste Füllung 42,67% der Gesamtmenge der Grundbestandteile und 3,49% Natriumbicarbonat, aufgelöst in der 9,6-fachen Menge Wasser, und die zweite Füllung 57,33% der Grundbestandteile und 1,98% wasserfreie Zitronensäure enhält.

Europäisches
Patentamt

**EUROPÄISCHER RECHERCHENBERICHT**

Nummer der Anmeldung

EP 96 11 6594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 064 155 (FERRERO) 10.November 1982 | 1 | A23G3/00 |
| Y | | 2-6,8,12 | A23G1/00 |
| | * Seite 8, Zeile 30 - Seite 9, Zeile 12; Ansprüche; Abbildung 4 * | | |
| | --- | | |
| Y | EP-A-0 437 927 (WARNER-LAMBERT) 24.Juli 1991 | 2-6,8,12 | |
| | * Spalte 2, Zeile 17 - Spalte 3, Zeile 25; Ansprüche 1-16 * | | |
| | --- | | |
| A | US-A-2 851 365 (J. R. PERROZZI) 9.September 1958 | 1 | |
| | * das ganze Dokument * | | |
| | --- | | |
| X | FR-A-2 285 078 (K. GIEBELEN) 16.April 1976 | 1 | |
| | * Seite 2, Zeile 15-26; Anspruch 2; Beispiel 2 * | | |
| | --- | | |
| A | EP-A-0 211 079 (FUJISAWA PHARMACEUTICAL) 25.Februar 1987 | 1 | |
| | * Seite 1, Zeile 5-7 * * Seite 4, Zeile 8-25 * * Seite 6, Zeile 3-16 * * Seite 11, Zeile 16-25 * | | **RECHERCHIERTE SACHGEBIETE (Int.Cl.6)** |
| | --- | | A23G |
| X | FR-A-759 400 (R. STEINER) 1.Februar 1934 | 1 | |
| | * Seite 1, Zeile 25-40 * | | |
| | --- | | |
| A | FR-A-1 003 636 (H. KIMMER VON KIMMERIGT) 21.März 1952 | 7,13 | |
| | * das ganze Dokument * | | |
| | --- | | |
| A | BE-A-385 578 (A. DACHSBECK) 29.Februar 1932 | 1 | |
| | * das ganze Dokument * | | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 23.Januar 1997 | Guyon, R |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
   Dokument

EPO FORM 1503 03.82 (P04C03)

EP 0 776 609 A1

**Europäisches Patentamt**

# EUROPÄISCHER RECHERCHENBERICHT

Nummer der Anmeldung

EP 96 11 6594

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | GB-A-624 931 (GRAY DUNN & CO.) 20.Juni 1949<br>* das ganze Dokument *<br>--- | 1 | |
| A | EP-A-0 211 079 (UEDA Y. ET AL.) 25.Februar 1987<br>* das ganze Dokument *<br>--- | 1 | |
| A | EP-A-0 299 943 (LIBEERT L.) 18.Januar 1989<br>--- | | |
| A | FR-A-1 573 397 (UNILEVER) 4.Juli 1969<br>* das ganze Dokument *<br>--- | 1 | |
| A | GB-A-1 033 337 (POLAK'S FRUTAL WORKS) 22.Juni 1966<br>* das ganze Dokument *<br>--- | 1 | |
| A | US-A-2 899 318 (F. E. LONG) 11.August 1959<br>----- | | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 23.Januar 1997 | Guyon, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P04C03)

7